# EUROPEAN PATENT SPECIFICATION

(11) **EP 4 212 311 B1**
(45) Date of publication and mention of the grant of the patent: **06.05.2026**
(21) Application number: 22837962.4
(22) Date of filing: 06.07.2022
(51) Int. Cl.: B29C 65/00, B29C 65/02, H01M 50/105, H01M 10/04, B29C 65/18, H01M 50/119, H01M 50/121, H01M 50/124, H01M 50/178, H01M 50/557, B29L 31/34, B29L 31/00

(54) **POUCH SEALING APPARATUS**
BEUTELVERSCHLIESSVORRICHTUNG
APPAREIL DE SCELLEMENT DE POCHE

(30) Priority: 08.07.2021 KR 20210089407
(43) Date of publication of application: 19.07.2023
(73) Proprietor: LG Energy Solution, Ltd., Seoul 07335 (KR)
(72) Inventor: SEO, Ja Young, Daejeon 34122 (KR); KIM, Dae Hong, Daejeon 34122 (KR); OH, Sae Young, Daejeon 34122 (KR)
(74) Representative: Goddar, Heinz J.
(86) International application number: PCT/KR2022/009735
(87) International publication number: WO 2023/282610

(56) References cited:
- JP-A- H09 199 175
- KR-A- 20110 039 011
- KR-A- 20110 039 011
- KR-A- 20150 045 097
- KR-A- 20150 045 097
- KR-A- 20180 093 792
- KR-A- 20180 107 859

## Description

### [Technical Field]

This application claims the benefit of priority to Korean Patent Application No. 2021-0089407 filed on July 8, 2021.

The present invention relates to a pouch sealing apparatus. More particularly, the present invention relates to a pouch sealing apparatus capable of easily performing sealing at a predetermined position of a pouch to be sealed while preventing leakage of an electrolytic solution out of a gas pocket portion.

### [Background Art]

Secondary batteries may be classified depending on the structure of an electrode assembly including a positive electrode, a separator, and a negative electrode. Typically, the electrode assembly may be a jelly-roll type (wound type) electrode assembly, which is configured to have a structure in which long sheet type positive electrodes and long sheet type negative electrodes are wound in the state in which separators are interposed therebetween, a stacked type electrode assembly, which is configured to have a structure in which a plurality of positive electrodes and a plurality of negative electrodes each cut to a predetermined size are sequentially stacked in the state in which separators are interposed therebetween, or a stacked and folded type electrode assembly, which is configured to have a structure in which bi-cells or mono-cells, each of which is configured such that positive electrodes and negative electrodes each having a predetermined size are stacked in the state in which separators are interposed therebetween, are wound using a separation film.

Secondary batteries may be classified into a cylindrical battery, a prismatic battery, and a pouch-shaped battery depending on the shape thereof. Thereamong, the pouch-shaped battery is manufactured using a pouch sheathing member constituted by a multilayered film including a metal layer (foil) and synthetic resin layers formed on an upper surface and a lower surface of the metal layer by coating, and therefore the weight of the pouch-shaped battery is remarkably reduced, compared to the cylindrical battery or the prismatic battery, which uses a metal can, whereby there are advantages in that it is possible to reduce the weight of the battery and to modify the battery into various forms.

In general, the pouch sheathing member is constituted by a lower sheathing member configured to receive an electrode assembly and an upper sheathing member configured to seal an upper part of the lower sheathing member. The electrode assembly is received in a receiving portion of the lower sheathing member, an edge of the receiving portion of the lower sheathing member and an edge of the upper sheathing member corresponding thereto are brought into tight contact with each other, parts of the tight contact portions are thermally fused, an electrolytic solution is introduced into the pouch sheathing member, and the remaining parts of the tight contact portions are sealed, whereby a secondary battery is temporarily assembled.

In an activation process, the secondary battery is loaded into a predetermined jig and the secondary battery is charged and discharged under conditions necessary for activation in order to achieve smooth current conduction. For a secondary battery, a process of activating a positive electrode active material and an activation process for creating a stable solid electrolyte interface (SEI) at a negative electrode must be essentially performed first during a first cycle due to characteristics thereof. A large amount of gas is generated in the secondary battery cell as the result of such activation processes. Subsequently, the generated gas is removed through an open or incised discharge port, and the gas discharge portion is thermally fused again so as to be sealed. A process of discharging the gas from the secondary battery as described above is generally referred to as a degassing process. After the degassing process, sealing is performed to complete the secondary battery.

While the gas generated in the secondary battery moves to a gas pocket portion, some of the electrolytic solution remains in a connection portion between the secondary battery and the gas pocket portion, and the force of sealing at the connection portion is greatly reduced by the electrolytic solution that remains in the connection portion. Some electrolytic solution moves to the gas pocket portion.

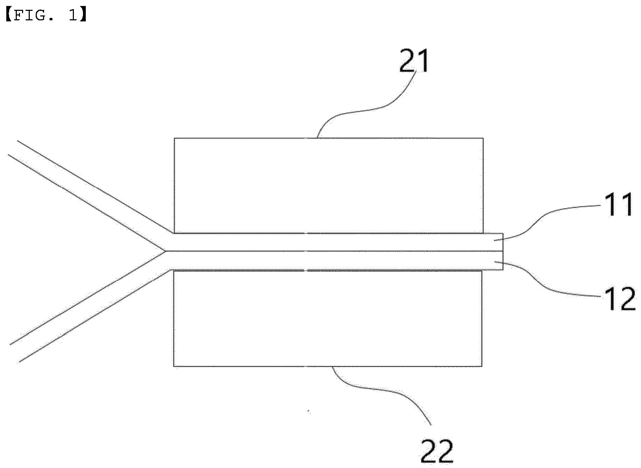

Since the pouch-shaped secondary battery is easily deformed, it is difficult to accurately set a sealing datum. The pouch-shaped secondary battery is less deformed when the pouch-shaped secondary battery is laid flat than when the pouch-shaped secondary battery is stood. As shown in FIG. 1, therefore, a pouch-shaped secondary battery is inserted into a sealing apparatus in the state in which the pouch-shaped secondary battery is laid flat, and sealing is performed by pressing of the sealing apparatus. An upper pouch 11 and a lower pouch 12 are inserted between an upper sealing tool 21 and a lower sealing tool 22, and the upper sealing tool 21 and the lower sealing tool 22 are moved toward each other in order to perform pressing, heating, and sealing. This method has a problem in that a residual electrolytic solution remains in a sealed portion, whereby sealing quality is lowered.

Patent Document 1 relates to a secondary battery manufacturing apparatus including an electrolytic solution removing device configured to push an electrolytic solution that remains in a connection portion of a pouch to a gas pocket portion in order to remove the electrolytic solution, a sealing device configured to seal the connection portion of the pouch, from which the electrolytic solution has been removed by the electrolytic solution removing device, and a discharging device configured to discharge the pouch, the connection portion thereof having been sealed by the sealing device.

In Patent Document 1, the pouch, from which the electrolytic solution has been removed by the electrolytic solution removing device, is transferred to the sealing device, which is separately provided at a rear end of the secondary battery manufacturing apparatus, and is sealed by the sealing device, wherein electrolytic solution removal and sealing are performed through a two-step process.

In Patent Document 2, a residual electrolytic solution is removed using a roller; however, a separate sealing process is performed after an electrolytic solution removal process, as in Patent Document 1.

In Patent Document 3, pressing is performed using a roller in order to reduce a possibility of mixed sealing due to an electrolytic solution; however, the roller alone is used as a sealing unit.

### (Prior Art Documents)

Korean Patent Application Publication No. 2019-0072962 ("Patent Document 1")
Japanese Registered Patent Publication No. 6204497 ("Patent Document 2")
Korean Registered Patent Publication No. 1417152 ("Patent Document 3")
The prior art relevant for the present application is given by KR 2015 0045097 A and KR 2011 0039011 A, each of which referring to a sealing process of a pouch case of a battery. The mentioned prior art discloses a pouch sealing apparatus configured to seal a pouch for batteries, the pouch including an upper pouch and a lower pouch, being configured to receive an electrode assembly and an electrolytic solution, the pouch sealing apparatus comprising:a mounting unit configured to seat a pouch receiving portion thereon; a press roller configured to move the electrolytic solution into the pouch receiving portion while the press roller rolls from open ends of the upper pouch and the lower pouch toward the pouch receiving portion; and a sealing tool configured to seal parts of the upper pouch and the lower pouch to be sealed,wherein the press roller is configured to fuse the upper pouch and the lower pouch in contact with each other by a heating portion added to a part of the roller while rolling, wherein the press roller comprises an upper press roller and a lower press roller, the upper press roller and the lower press roller being positioned such that the parts of the upper pouch and the lower pouch to be sealed are disposed therebetween.

### [Disclosure]

### [Technical Problem]

The present invention has been made in view of the above problems, and it is an object of the present invention to provide a pouch sealing apparatus capable of discharging or removing an electrolytic solution from a sealed portion of a pouch-shaped secondary battery and accurately performing sealing while maintaining the shape of a part of a pouch to be sealed.

### [Technical Solution]

The present application is defined by the features of the appended independent claims. Particular embodiments are given by the additional features of the appended dependent claims.

In order to accomplish the above object, the present invention provides a pouch sealing apparatus configured to seal a pouch for batteries, the pouch including an upper pouch and a lower pouch, the pouch being configured to receive an electrode assembly and an electrolytic solution, the pouch sealing apparatus including a mounting unit configured to seat a pouch receiving portion thereon, a press roller configured to move the electrolytic solution into the pouch receiving portion while the press roller rolls from open ends of the upper pouch and the lower pouch toward the pouch receiving portion, and a sealing tool configured to seal parts of the upper pouch and the lower pouch to be sealed, wherein the press roller is configured to fuse the upper pouch and the lower pouch in contact with each other by a heating portion added to a part of the roller while rolling.

The press roller includes an upper press roller and a lower press roller, the upper press roller and the lower press roller being positioned such that the parts of the upper pouch and the lower pouch to be sealed are disposed therebetween.

The heating portion of at least one of the upper press roller and the lower press roller may be configured such that the temperature thereof is increased up to 250°C, and the upper press roller and the lower press roller may be spaced apart from each other by a predetermined distance.

The upper press roller is located at upper ends of a pair of upper rails, the upper rails being horizontally spaced apart from each other by a predetermined distance, the lower press roller is located at upper ends of a pair of lower rails, the lower rails being horizontally spaced apart from each other by a predetermined distance, the pair of upper rails and the pair of lower rails are located so as to correspond to each other up and down, and the upper press roller and the lower press roller horizontally roll on the pair of upper rails and the pair of lower rails, respectively.

The vertical distance between the pair of upper rails and the pair of lower rails may be configured to adjust the distance between the upper press roller and the lower press roller.

The distance between the pair of upper rails and the pair of lower rails may be configured to be gradually reduced along a direction toward the electrode assembly.

The present invention provides a pouch-shaped secondary battery manufactured using the pouch sealing apparatus.

The present invention provides a pouch sealing method to seal a pouch for secondary batteries including an upper pouch and a lower pouch, the pouch being configured to receive an electrode assembly and an electrolytic solution, the pouch sealing method including (s1) horizontally locating the upper pouch and the lower pouch having the electrode assembly and the electrolytic solution received therein on a mounting unit and disposing a gas pocket portion of the pouch between a pair of rail units, the pair of rail units being vertically spaced apart from each other, (s2) bringing the gas pocket portions into tight contact with each other while moving a pair of press rollers on the pair of rail units from an end of the gas pocket portion of the pouch in a direction toward the electrode assembly, (s3) moving the pair of press rollers in a direction away from the electrode assembly, so as to space the pair of press rollers apart from the electrode assembly by a predetermined distance, and (s4) sealing the upper pouch and the lower pouch between the press rollers and the electrode assembly using a sealing unit.

In step (s2), the temperature of each of the press rollers may be increased to bring the gas pocket portions of the pouch into tight contact with each other.

In step (s2), the distance between the pair of rail units may be adjusted to adjust the distance between the pair of press rollers.

In addition, the present invention may provide possible combinations of the above solving means.

### [Advantageous Effects]

As is apparent from the above description, a pouch sealing apparatus according to the present invention has an effect in that minimum constructions are added to a conventional pouch sealing apparatus, whereby it is possible to reduce or prevent leakage of an electrolytic solution while minimizing an increase in volume of the apparatus.

In addition, the pouch sealing apparatus according to the present invention has an advantage in that the electrolytic solution is removed from a sealed portion, whereby it is possible to improve sealing efficiency.

### [Description of Drawings]

FIG. 1 is an outline view of a conventional pouch sealing principle.
FIG. 2 is an outline view of a pouch sealing apparatus according to an embodiment of the present invention.
FIG. 3 is an outline view of a pouch sealing process according to an embodiment of the present invention.
FIG. 4 is an outline view of a press roller according to an embodiment of the present invention.
FIG. 5 is a schematic view of a pouch after primary sealing using the press roller shown in FIG. 4 and second sealing using a sealing tool have been performed.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

In addition, all numeric ranges include the lowest value, the highest value, and all intermediate values therebetween unless the context clearly indicates otherwise.

Embodiments of the present invention will be described in detail with reference to the accompanying drawings.

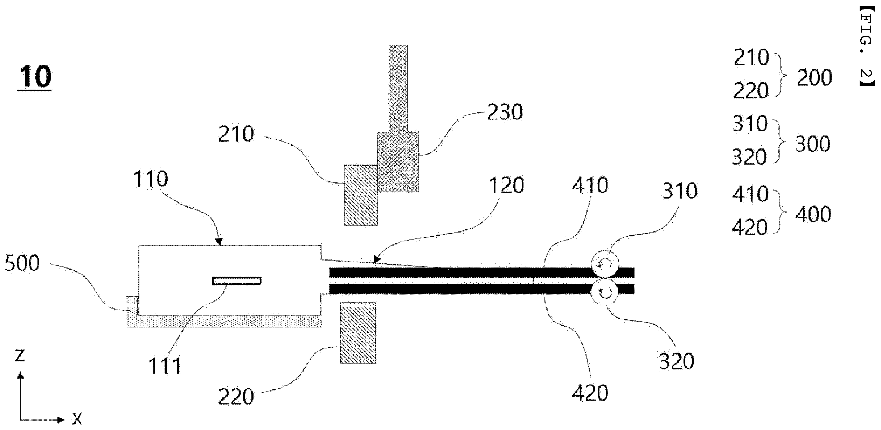

FIG. 2 is an outline view of a pouch sealing apparatus according to an embodiment of the present invention.

Referring to FIG. 2, the pouch sealing apparatus 10 according to the embodiment of the present invention may include a mounting unit 500 configured to allow a pouch receiving portion 110 to be horizontally seated thereon, a sealing tool 200 configured to perform sealing while face-to-face pressing a predetermined position of a gas pocket portion 120 of a pouch, a press roller 300 configured to horizontally move while pressing the gas pocket portion 120 of the pouch in the state in which the gas pocket portion 120 of the pouch is located therebetween, and a rail unit 400 configured to support the press roller 300 and to form a horizontal movement path thereof.

In the present invention, a pouch-shaped secondary battery before sealing includes the receiving portion 110, in which an electrode assembly (not shown) is received, and an electrode lead 111.

The electrode assembly may be a jelly-roll type assembly, which is configured to have a structure in which a long sheet type positive electrode and a long sheet type negative electrode are wound in the state in which a separator is interposed therebetween, a stacked type assembly, which is configured to have a structure in which a rectangular positive electrode and a rectangular negative electrode are stacked in the state in which a separator is interposed therebetween, a stacked and folded type assembly, which is configured to have a structure in which unit cells are wound using a long separation film, or a laminated and stacked type assembly, which is configured to have a structure in which battery cells are stacked in the state in which a separator is interposed therebetween and are then attached to each other. However, the present invention is not limited thereto.

Also, it is obvious that an electrolyte may be replaced by a solid electrolyte or a gel type quasi-solid electrolyte obtained by adding an additive to a solid electrolyte, the gel type quasi-solid electrolyte having an intermediate phase between a liquid and a solid, in addition to a liquid electrolyte, which is commonly used.

The electrode assembly is received in the receiving portion 110, and the pouch is generally configured to have a laminate sheet structure including an inner layer, a metal layer, and an outer layer. The inner layer is disposed in direct contact with the electrode assembly, and therefore the inner layer must exhibit high insulation properties and high resistance to an electrolytic solution. In addition, the inner layer must exhibit high sealability in order to hermetically seal the pouch from the outside, i.e. a thermally-bonded sealed portion between inner layers must exhibit excellent thermal bonding strength. The inner layer may be made of a material selected from among a polyolefin-based resin, such as polypropylene, polyethylene, polyethylene acrylate, or polybutylene, a polyurethane resin, and a polyimide resin, which exhibit excellent chemical resistance and high sealability. However, the present invention is not limited thereto, and polypropylene, which exhibits excellent mechanical-physical properties, such as tensile strength, rigidity, surface hardness, and impact resistance, and excellent chemical resistance, is the most preferably used.

The metal layer, which is disposed so as to abut the inner layer, corresponds to a barrier layer configured to prevent moisture or various kinds of gas from permeating into the battery from the outside. An aluminum thin film, which is lightweight and easily shapeable, may be used as a preferred material for the metal layer.

The outer layer is provided on the other surface of the metal layer. The outer layer may be made of a heat-resistant polymer that exhibits excellent tensile strength, resistance to moisture permeation, and resistance to air transmission such that the outer layer exhibits high heat resistance and chemical resistance while protecting the electrode assembly. As an example, the outer layer may be made of nylon or polyethylene terephthalate. However, the present invention is not limited thereto.

In the present invention, the pouch before sealing includes the receiving portion, which receives the electrode assembly and the electrolytic solution, and the gas pocket portion 120, which captures gas generated in an activation process.

The mounting unit 500 includes a horizontal support plate (not shown) fixed to a working table or the ground, and the material and shape of the mounting unit are not particularly restricted as long as the mounting unit is capable of stably supporting the pouch receiving portion 110, which is located thereon, so as to be horizontally disposed. A vertical partition wall configured to preventing movement or twisting of the pouch receiving portion 110 in a sealing process may be located, and a fixing means configured to fix the pouch receiving portion 110, which is disposed on the mounting unit, may be further provided.

Next, the sealing tool 200 will be described.

In the present invention, the sealing tool 200, which is well known in the art to which the present invention pertains, is configured such that an upper sealing device 210 and a lower sealing device 220 are mounted above and under the gas pocket portion 120 of the pouch and such that the upper sealing device 210 and the lower sealing device 220 are moved toward each other to seal the gas pocket portion 120 located therebetween while pressing and heating the gas pocket portion. The sealing tool 200 may include a driving cylinder 230 configured to drive the upper sealing device 210 and the lower sealing device 220 so as to be moved upwards and downwards.

Next, the press roller 300 will be described.

In the present invention, the press roller 300 may include an upper press roller 310 and a lower press roller 320 located horizontally while being spaced apart from each other by a predetermined distance.

The upper press roller 310 and the lower press roller 320 are moved from an end (not shown) of the gas pocket portion 120 located so as to face the pouch receiving portion 110 formed as the result of extending from the pouch receiving portion 110 to the pouch receiving portion 110 such that the electrolytic solution is introduced into the pouch receiving portion 110. Here, the end of the gas pocket portion 120 may be located between the upper press roller 310 and the lower press roller 320.

Although not shown in the figure, a guide portion (not shown) configured to horizontally flatten the gas pocket portion 120 may be included.

In the present invention, the distance between the upper press roller 310 and the lower press roller 320 may be 90% to 150% of the thickness of a laminate sheet that forms the pouch. If the distance between the upper press roller 310 and the lower press roller 320 is less than 90% of the thickness of the laminate sheet, the laminate sheet that forms the gas pocket portion 120 may be damaged in a pressing and rolling process. If the distance between the upper press roller 310 and the lower press roller 320 is greater than 150% of the thickness of the laminate sheet, it is not possible to completely remove the electrolytic solution that remains in the gas pocket portion 120.

Here, each of the upper press roller 310 and the lower press roller 320 may be made of an elastic material. This is advantageous to prevention of damage to the laminate sheet in the process of pressing the laminate sheet that forms the gas pocket portion 120.

Each of the upper press roller 310 and the lower press roller 320 may include a heating member (not shown) such that an outer surface of each of the upper press roller 310 and the lower press roller 320 can be heated up to 250°C, and the heating temperature may be adjusted depending on operating conditions. Laminate sheets located so as to face each other between the upper press roller 310 and the lower press roller 320 heated to a high temperature are heated, whereby facing layers of the laminate sheets are fused to each other. Since the gas pocket portion 120 is fused, as described above, it is possible to prevent reintroduction of the electrolytic solution into the gas pocket portion 120 in a process of performing main sealing using the sealing tool 200, which is advantageous to efficient sealing.

In the present invention, the pouch sealing apparatus 10 may include a rail unit 400 configured to support the upper press roller 310 and the lower press roller 320 and to form movement paths thereof. The rail unit 400 may include an upper rail 410 and a lower rail 420 located horizontally, wherein the upper rail 410 and the lower rail 420 may be located at opposite sides of the gas pocket portion 120 so as to correspond to each other in a direction in which the gas pocket portion 120 extends outwards from the pouch receiving portion 110.

Here, the upper rail 410 and the lower rail 420 may be configured such that the distance therebetween is reduced from the end of the gas pocket portion 120 towards the pouch receiving portion 110. This is advantageous to efficient movement of the electrolytic solution to the pouch receiving portion 110 while stably bringing the gas pocket portions 120 into tight contact with each other.

Here, each of the upper rail 410 and the lower rail 420 may be formed in the shape of a groove that is concave in the middle thereof in a lateral direction (y-axis direction), and each of the upper press roller 310 and the lower press roller 320 located respectively on the upper rail 410 and the lower rail 420 may be provided with a protrusion (not shown) configured to be inserted into the groove. As a result, the upper press roller 310 and the lower press roller 320 are movable on the upper rail 410 and the lower rail 420 corresponding thereto only in a forward-rearward direction (x-axis direction) based on the pouch receiving portion 110 but are not movable in a leftward-rightward direction (y-axis direction), whereby it is possible to prevent twisting of or damage to the gas pocket portion 120 located between the upper press roller 310 and the lower press roller 320.

Although not shown in the figure, a distance adjustment portion (not shown) configured to adjust the distance between the upper rail 410 and the lower rail 420 may be provided, wherein the distance adjustment portion may move the upper rail 410 and/or the lower rail 420 upwards and downwards to adjust the distance therebetween. As described above, the distance between the upper press roller 310 and the lower press roller 320 may be adjusted through adjustment of the distance between the upper rail 410 and the lower rail 420, whereby it is possible to adjust the force of pressing against the gas pocket portion 120.

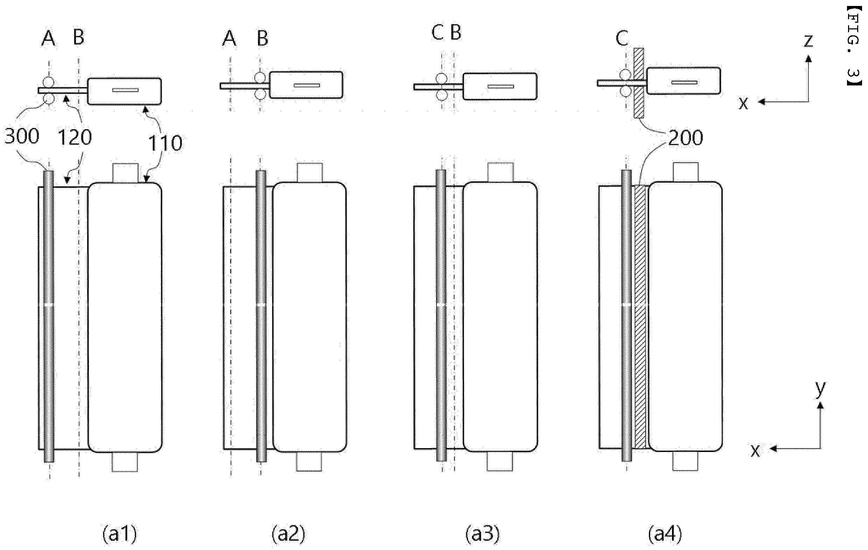

FIG. 3 is an outline view of a pouch sealing process according to an embodiment of the present invention.

A pouch sealing method according to an embodiment of the present invention will be described with reference to FIG. 3.

In the pouch sealing method according to the embodiment of the present invention, a pouch having an electrode assembly received in a pouch receiving portion 110 is prepared, the pouch receiving portion 110 is horizontally seated on the mounting unit 500, and an end of a gas pocket portion 120 formed as the result of extending from the pouch receiving portion 110 is horizontally disposed so as to be located between the upper press roller 310 and the lower press roller 320 of the press roller 300.

As shown in (a1) of FIG. 3, the upper press roller 310 and the lower press roller 320 are located on and under the gas pocket portion 120 at position A of the end of the gas pocket portion. FIG. 3 shows that position A is distant from the end of the gas pocket portion 120 that faces the pouch receiving portion 110 in a direction toward the pouch receiving portion 110 by a predetermined distance; however, position A may be located at the end of the gas pocket portion 120 or at an outside portion spaced apart from the end of the gas pocket portion 120 so as to be opposite the pouch receiving portion 110. Position A is not particularly restricted as long as it is possible to push an electrolytic solution in the gas pocket portion 120 so as to be introduced into the pouch receiving portion 110.

The upper press roller 310 and the lower press roller 320, each of which has been heated to a predetermined temperature, move to position B, which is maximally adjacent to the pouch receiving portion 110, while rolling toward the pouch receiving portion 110 in a state of pressing the gas pocket portion 120 disposed therebetween (a2). In this process, the gas pocket portion 120 is heated while being pressed by the upper press roller 310 and the lower press roller 320, whereby the gas pocket portion 120 is fused. In addition, the electrolytic solution that remains in the gas pocket portion 120 is moved toward the pouch receiving portion 110 by pressing of the upper press roller 310 and the lower press roller 320, and is finally introduced into the pouch receiving portion 110.

In the present invention, the upper press roller 310 and the lower press roller 320 are rotated in opposite directions while facing each other.

Subsequently, the upper press roller 310 and the lower press roller 320 located at position B move by a predetermined distance in an extension direction of the gas pocket portion 120 that is distant from the pouch receiving portion 110, and are located at position C (a3). Here, position C is located between position A and position B, and the upper press roller 310 and the lower press roller 320 serve to fix the gas pocket portion 120 located therebetween.

In spaces between the upper press roller 310 and the lower press roller 320 located at position B and the pouch receiving portion 110, the upper sealing device 210 and the lower sealing device 220, each of which has been heated to a predetermined temperature, seals the gas pocket portion 120 located therebetween at a sealing position thereof while moving in a state of being opposite each other, whereby it is possible to increase the force of sealing the pouch and to prevent the occurrence of defects (a4).

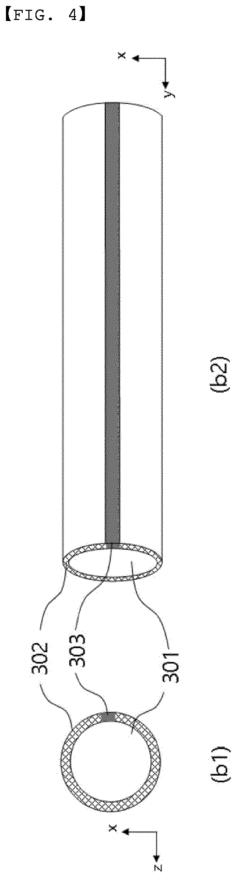

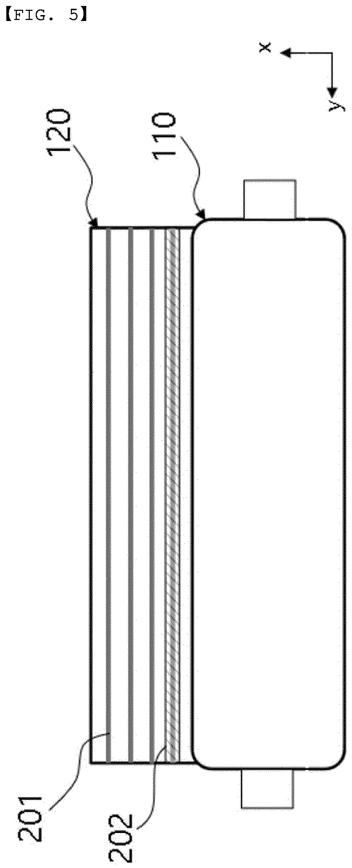

FIG. 4 is an outline view of a press roller according to an embodiment of the present invention. FIG. 5 is a schematic view of a pouch after primary sealing using the press roller shown in FIG. 4 and secondary sealing using the sealing tool have been performed.

The press roller 300 according to the embodiment of the present invention will be described in detail with reference to FIGS. 4 and 5.

(b1) of FIG. 4 is a side view of the press roller 300, and (b2) of FIG. 4 is a front view of the press roller 300. Referring to FIG. 4, in the present invention, the press roller 300 may include a roller portion 301 that forms a central axis thereof and an outer cover portion (not shown) formed so as to wrap an outer curved surface of the roller portion 301. The outer cover portion may include a heat dissipation portion 302 and a heating portion 303, wherein the heating portion 303 may be formed at a part of the outer cover portion so as to be parallel to the central axis of the press roller 300. The heating portion 303 may be provided with an additional heating member configured to increase the temperature of the heating portion 303. Here, an outer surface of the heating portion 303 may face the gas pocket portion 120 when the press roller 300 rolls and may primarily seal a facing region of the gas pocket portion 120. In addition, the heat dissipation portion 302 may be located at an outer periphery of the heating portion 303 to prevent heat of the heating portion 303 from being transferred to a part of the outer cover portion of the press roller 300 other than the heating portion 303.

The press roller 300 may have a diameter of 5 mm to 100 mm, and in (b1) of FIG. 4, the length of the outermost circumference of the heating portion 303 may be 1/30 to 1/2 of the length of the circumference of the press roller 300. As a result, the heating portion 303 is formed at only a part of the press roller 300, which is advantageous to prevention of excessive heating of the gas pocket portion 120 and damage to the gas pocket portion. In addition, one or more heating portions 303 may be disposed at an outer circumferential surface of the press roller 300 so as to be spaced apart from each other by a predetermined distance.

In the present invention, the heating portion 303 may be provided at one of the upper press roller 310 and the lower press roller 320, or may be provided at each of the upper press roller 310 and the lower press roller 320.

Referring to FIG. 5, the press roller 300 may primarily seal a part of the gas pocket portion 120 that faces the heating portion 303 while rolling from the end of the gas pocket portion 120 toward the pouch receiving portion 110 to form a primarily sealed portion 201. When the press roller 300 rolls on an outer surface of the gas pocket portion 120, the pouch constituting the gas pocket portion 120 is pressed toward the pouch receiving portion 110, whereby an electrolytic solution that remains in the gas pocket portion 120 moves toward the pouch receiving portion 110. In addition, the primarily sealed portion 201 is formed by the heating portion 303, whereby it is possible to prevent movement of the electrolytic solution to the outside. The press roller 300 may form one or more primarily sealed portions 201 while rolling outside the gas pocket portion 120. In the present invention, the sealing tool 200 may secondarily seal the primarily sealed portion 201 formed the closest to the pouch receiving portion 110 to form a secondarily sealed portion 202. Consequently, uniform and quality guaranteed sealing having a regular thickness and width is achieved with respect to the pouch.

In the present invention, the sealing temperature of the heating portion 303 formed at the press roller 300 may be lower than the sealing temperature of the sealing tool 200, and the pressing pressure of the press roller 300 applied to the gas pocket portion 120 may be lower than the pressing pressure of the sealing tool 200 applied to the gas pocket portion 120.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and technical idea of the present invention, and it will be obvious that such changes and modifications fall within the scope of the appended claims.

### (Description of Reference Numerals)

- 10:: Pouch sealing apparatus
- 11:: Upper pouch
- 12:: Lower pouch
- 21:: Upper sealing tool
- 22:: Lower sealing tool
- 110:: Pouch receiving portion
- 111:: Electrode lead
- 120:: Gas pocket portion
- 200:: Sealing tool
- 201:: Primarily sealed portion
- 202:: Secondarily sealed portion
- 210:: Upper sealing device
- 220:: Lower sealing device
- 230:: Cylinder
- 300:: Press roller
- 301:: Roller portion
- 302:: Heat dissipation portion
- 303:: Heating portion
- 310:: Upper press roller
- 320:: Lower press roller
- 400:: Rail unit
- 410:: Upper rail
- 420:: Lower rail
- 500:: Mounting unit

## Claims

1. A pouch sealing apparatus configured to seal a pouch for batteries, the pouch including an upper pouch (11) and a lower pouch (12), the pouch being configured to receive an electrode assembly and an electrolytic solution, the pouch sealing apparatus comprising:
a mounting unit (500) configured to seat a pouch receiving portion (110) thereon;
a press roller (300) configured to move the electrolytic solution into the pouch receiving portion (110) while the press roller (300) rolls from open ends of the upper pouch (11) and the lower pouch (12) toward the pouch receiving portion (110); and
a sealing tool (200) configured to seal parts of the upper pouch (11) and the lower pouch (12) to be sealed,
wherein the press roller (300) is configured to fuse the upper pouch (11) and the lower pouch (12) in contact with each other by a heating portion (303) added to a part of the roller (300) while rolling,
wherein the heating portion of at least one of the upper press roller (310) and the lower press roller (320) is configured such that a temperature thereof is increased up to 250°C, and the upper press roller (310) and the lower press roller (320) are spaced apart from each other by a predetermined distance,
**characterized in that**
the upper press roller (310) is located at upper ends of a pair of upper rails (410), the upper rails (410) being horizontally spaced apart from each other by a predetermined distance, and **in that**
the lower press roller (320) is located at upper ends of a pair of lower rails (420), the lower rails (420) being horizontally spaced apart from each other by a predetermined distance,
wherein the pair of upper rails (410) and the pair of lower rails (420) are located so as to correspond to each other up and down, and
wherein the upper press roller (310) and the lower press roller (320) horizontally roll on the pair of upper rails (410) and the pair of lower rails (420), respectively.

2. The pouch sealing apparatus according to claim 1, wherein
the heating portion of at least one of the upper press roller (310) and the lower press roller (320) is configured such that a temperature thereof is increased up to 250°C, and
the upper press roller (310) and the lower press roller (320) are spaced apart from each other by a predetermined distance.

3. The pouch sealing apparatus according to claim 1, wherein a vertical distance between the pair of upper rails (410) and the pair of lower rails (420) is configured to adjust a distance between the upper press roller (310) and the lower press roller (300).

4. The pouch sealing apparatus according to claim 1, wherein a distance between the pair of upper rails (410) and the pair of lower rails (420) is configured to be gradually reduced along a direction toward the electrode assembly.

5. A pouch sealing method to seal a pouch for secondary batteries comprising an upper pouch (11) and a lower pouch (12), the pouch being configured to receive an electrode assembly and an electrolytic solution, the pouch sealing method comprising:
(s1) horizontally locating the upper pouch (11) and the lower pouch (12) having the electrode assembly and the electrolytic solution received therein on a mounting unit (500) and disposing a gas pocket portion (120) of the pouch between a pair of rail units (410, 420), the pair of rail units (410, 420) being vertically spaced apart from each other;
(s2) bringing the gas pocket portions (120) into tight contact with each other while moving a pair of press rollers (300) on the pair of rail units (410, 420) from an end of the gas pocket portion (120) of the pouch in a direction toward the electrode assembly;
(s3) moving the pair of press rollers (300) in a direction away from the electrode assembly, so as to space the pair of press rollers (300) apart from the electrode assembly by a predetermined distance; and
(s4) sealing the upper pouch (11) and the lower pouch (12) between the press rollers (300) and the electrode assembly using a sealing unit (200).

6. The pouch sealing method according to claim 5, wherein, in step (s2), a temperature of each of the press rollers (300) is increased to bring the gas pocket portions (120) of the pouch into tight contact with each other.

7. The pouch sealing method according to claim 5, wherein, in step (s2), a distance between the pair of rail units (410, 420) is adjusted to adjust a distance between the pair of press rollers (300).

## Patentansprüche

1. Beutelverschließvorrichtung zum Verschließen eines Beutels für Batterien, wobei der Beutel einen oberen Beutelteil (11) und einen unteren Beutelteil (12) umfasst und der Beutel zur Aufnahme einer Elektrodenanordnung und einer Elektrolytlösung ausgelegt ist, wobei die Beutelverschließvorrichtung umfasst:
eine Halteeinheit (500) zum Aufsetzen eines Beutel-Aufnahmeabschnitts (110) darauf;
eine Andruckrolle (300) zum Bewegen der Elektrolytlösung in den Beutelaufnahmeabschnitt (110), während die Andruckrolle (300) von den offenen Enden des oberen Beutelteils (11) und des unteren Beutelteils (12) in Richtung des Beutelaufnahmeabschnitts (110) abrollt; und
ein Verschlusswerkzeug (200) zum Verschmelzen von Teilen des oberen Beutelteils (11) und des unteren Beutelteils (12), die verschlossen werden sollen,
wobei die Andruckrolle (300) derart ausgelegt ist, dass sie, während sie abrollt, den oberen Beutelteil (11) und den unteren Beutelteil (12) in Kontakt durch einen Heizabschnitt (303) miteinander verschmilzt, der an einem Teil der Rolle (300) angebracht ist,
wobei der Heizabschnitt der oberen Andruckrolle (310) und/oder der unteren Andruckrolle (320) derart ausgelegt ist, dass dessen Temperatur auf bis zu 250 °C erhöht wird, und die obere Andruckrolle (310) und die untere Andruckrolle (320) in einem vorbestimmten Abstand voneinander angeordnet werden,
**dadurch gekennzeichnet, dass**
die obere Andruckrolle (310) an den oberen Enden eines Paares oberer Schienen (410) angeordnet ist, wobei die oberen Schienen (410) in einem vorbestimmten Abstand voneinander horizontal beabstandet sind, und dass
die untere Andruckrolle (320) an den oberen Enden eines Paares von unteren Schienen (420) angeordnet ist, wobei die unteren Schienen (420) in einem vorbestimmten Abstand voneinander horizontal beabstandet sind,
wobei das Paar oberer Schienen (410) und das Paar unterer Schienen (420) vertikal zueinander korrespondierend angeordnet sind, und
wobei die obere Andruckrolle (310) und die untere Andruckrolle (320) horizontal an dem Paar oberer Schienen (410) bzw. dem Paar unterer Schienen (420) abrollen.

2. Beutelverschließvorrichtung nach Anspruch 1, wobei
der Heizabschnitt der oberen Andruckrolle (310) und/oder der unteren Andruckrolle (320) so ausgebildet ist, dass dessen Temperatur bis zu 250 °C erhöht wird, und
wobei die obere Andruckrolle (310) und die untere Andruckrolle (320) sind in einem vorgegebenen Abstand voneinander angeordnet.

3. Beutelverschließvorrichtung nach Anspruch 1, wobei ein vertikaler Abstand zwischen dem Paar oberer Schienen (410) und dem Paar unterer Schienen (420) dazu ausgelegt ist, einen Abstand zwischen der oberen Andruckrolle (310) und der unteren Andruckrolle (300) einzustellen.

4. Beutelverschließvorrichtung nach Anspruch 1, wobei ein Abstand zwischen dem Paar oberer Schienen (410) und dem Paar unterer Schienen (420) sich entlang einer Richtung zur Elektrodenanordnung hin allmählich verringert.

5. Verfahren zum Verschließen eines Beutels für Sekundärbatterien, der einen oberen Beutelteil (11) und einen unteren Beutelteil (12) umfasst, wobei der Beutel so ausgebildet ist, dass er eine Elektrodenanordnung und eine Elektrolytlösung aufnehmen kann, wobei das Verfahren zum Verschließen des Beutels umfasst:
(s1) horizontales Anordnen des oberen Beutelteils (11) und des unteren Beutelteils (12), in denen die Elektrodenanordnung und die Elektrolytlösung aufgenommen werden, auf einer Halteeinheit (500), und Anordnen eines Gaspolsterabschnitts (120) des Beutels zwischen einem Paar von Schieneneinheiten (410, 420), wobei das Paar von Schieneneinheiten (410, 420) vertikal voneinander beabstandet ist;
(s2) Bringen der Gaskammerabschnitte (120) in engen Kontakt miteinander, während ein Paar von Andruckrollen (300) auf dem Paar von Schieneneinheiten (410, 420) von einem Ende des Gaskammerabschnitts (120) des Beutels in Richtung der Elektrodenanordnung bewegt wird;
(s3) Bewegen des Paares von Andruckrollen (300) in einer Richtung weg von der Elektrodenanordnung, um das Paar von Andruckrollen (300) um einen vorbestimmten Abstand von der Elektrodenanordnung zu beabstanden; und
(s4) Verschließen des oberen Beutelteils (11) und des unteren Beutelteils (12) zwischen den Andruckrollen (300) und der Elektrodenbaugruppe unter Verwendung einer Verschlusseinheit (200).

6. Verfahren zum Verschließen eines Beutels gemäß Anspruch 5, wobei in Schritt (s2) die Temperatur jeder der Andruckrollen (300) erhöht wird, um die Gaspolsterabschnitte (120) des Beutels in engen Kontakt miteinander zu bringen.

7. Verfahren zum Verschließen von Beuteln nach Anspruch 5, wobei in Schritt (s2) ein Abstand zwischen dem Paar von Schieneneinheiten (410, 420) eingestellt wird, um einen Abstand zwischen dem Paar von Andruckrollen (300) einzustellen.

## Revendications

1. Appareil de scellement de poche configuré pour sceller une poche pour batteries, la poche comprenant une poche supérieure (11) et une poche inférieure (12), la poche étant configurée pour recevoir un ensemble d'électrodes et une solution électrolytique, l'appareil de scellement de poche comprenant :
un dispositif de montage (500) configuré pour installer dessus une partie réceptrice de poche (110) ;
un cylindre de pression (300) configuré pour déplacer la solution électrolytique dans la partie réceptrice de poche (110) pendant le roulement du cylindre de pression (300) depuis des extrémités ouvertes de la poche supérieure (11) et de la poche inférieure (12) vers la partie réceptrice de poche (110) ; et
un outil de scellement (200) configuré pour sceller des éléments de la poche supérieure (11) et de la poche inférieure (12) à sceller,
le cylindre de pression (300) étant configuré pour fusionner la poche supérieure (11) et la poche inférieure (12) en contact entre elles par une partie de chauffage (303) ajoutée à un élément du cylindre (300) au cours du roulement,
la partie de chauffage d'au moins un du cylindre de pression supérieur (310) et du cylindre de pression inférieur (320) étant configurée de façon à augmenter sa température en la portant à 250°C, et le cylindre de pression supérieur (310) et le cylindre de pression inférieur (320) étant espacés l'un de l'autre par une distance prédéterminée,
**caractérisé en ce que**
le cylindre de pression supérieur (310) est situé sur des extrémités supérieures d'une paire de glissières supérieures (410), les glissières supérieures (410) étant espacées horizontalement l'une de l'autre par une distance prédéterminée, et **en ce que**
le cylindre de pression inférieur (320) est situé sur des extrémités supérieures d'une paire de glissières inférieures (420), les glissières inférieures (420) étant espacées horizontalement l'une de l'autre par une distance prédéterminée,
la paire de glissières supérieures (410) et la paire de glissières inférieures (420) étant positionnées de façon à correspondre l'une avec l'autre en haut et en bas, et
le cylindre de pression supérieur (310) et le cylindre de pression inférieur (320) roulant horizontalement sur la paire de glissières supérieures (410) et la paire de glissières inférieures (420) respectivement.

2. Appareil de scellement de poche selon la revendication 1,
la partie de chauffage d'au moins un du cylindre de pression supérieur (310) et du cylindre de pression inférieur (320) étant configurée de façon à augmenter sa température en la portant à 250°C, et
le cylindre de pression supérieur (310) et le cylindre de pression inférieur (320) étant espacés l'un de l'autre par une distance prédéterminée.

3. Appareil de scellement de poche selon la revendication 1, une distance verticale entre la paire de glissières supérieures (410) et la paire de glissières inférieures (420) étant configurée pour ajuster une distance entre le cylindre de pression supérieur (310) et le cylindre de pression inférieur (300).

4. Appareil de scellement de poche selon la revendication 1, une distance entre la paire de glissières supérieures (410) et la paire de glissières inférieures (420) étant configurée de façon à diminuer progressivement dans la direction de l'ensemble d'électrodes.

5. Procédé de scellement de poche pour sceller une poche pour batteries secondaires comprenant une poche supérieure (11) et une poche inférieure (12), la poche étant configurée pour recevoir un ensemble d'électrodes et une solution électrolytique, le procédé de scellement de poche comprenant :
(S1) le positionnement horizontal de la poche supérieure (11) et de la poche inférieure (12), l'ensemble d'électrodes et la solution électrolytique reçus dedans étant placés sur un dispositif de montage (500), et la disposition d'une partie de poche de gaz (120) de la poche entre une paire de glissières (410, 420), les deux glissières (410, 420) étant espacées verticalement l'une de l'autre ;
(S2) le positionnement des parties de poche de gaz (120) en contact étroit l'une avec l'autre, tout en déplaçant une paire de cylindre de pression (300) sur la paire de glissières (410, 420) depuis un bout de la partie de poche de gaz (120) de la poche, dans la direction de l'ensemble d'électrodes ;
(S3) le déplacement de la paire de cylindre de pression (300) dans la direction opposée à l'ensemble d'électrodes, de façon à espacer d'une distance prédéterminée la paire de cylindres de pression (300) de l'ensemble d'électrodes ; et
(S4) le scellement de la poche supérieure (11) et de la poche inférieure (12) entre les cylindres de pression (300) et l'ensemble d'électrodes en utilisant un dispositif de scellement (200).

6. Procédé de scellement de poche selon la revendication 5, dans lequel, à l'étape (S2), on augmente une température de chacun des cylindres de pression (300) pour amener les parties de poche de gaz (120) de la poche en étroit contact entre elles.

7. Procédé de scellement de poche selon la revendication 5, dans lequel, à l'étape (S2), une distance entre la paire de glissières (410, 420) est ajustée afin d'ajuster une distance entre la paire de cylindres de pression (300).
